# EUROPÄISCHE PATENTSCHRIFT

(11) **EP 0 880 017 B1**
(45) Veröffentlichungstag und Bekanntmachung des Hinweises auf die Patenterteilung: **13.10.2004**
(21) Anmeldenummer: 98810341.2
(22) Anmeldetag: 20.04.1998
(51) Int. Cl.: G01M 7/02, G01M 13/04

(54) **Verfahren zum Schutz vor Vibrationen bei Rotationsmaschinen**
Method of protection against vibrations by rotary machines
Méthode de protection contre les vibrations des machines en rotation

(30) Priorität: 22.05.1997 DE 19721364
(43) Veröffentlichungstag der Anmeldung: 25.11.1998
(73) Patentinhaber: ALSTOM Technology Ltd, 5400 Baden (CH)
(72) Erfinder: Wettstein, Hans, Dr., 5442 Fislisbach (CH)

(56) Entgegenhaltungen:
- EP-A- 0 536 415
- DE-A- 3 929 792
- DE-A- 4 406 723
- DE-C- 19 625 947
- DE-U- 29 513 754
- US-A- 4 377 784
- US-A- 4 408 294
- US-A- 4 453 407
- US-A- 5 018 342

## Beschreibung

### Technisches Gebiet

Die Erfindung betrifft ein Verfahren zum Auslösen von Schutzmassnahmen an schnell laufenden Rotationsmaschinen bei Auftreten von unzulässigen Vibrationen, wobei im wesentlichen die Schwingungen oder davon abgeleitete Werte als Messgrössen an den Lagern der Rotoren gemessen werden.

### Stand der Technik

Bei bekannten Verfahren zum Schutz von schnell laufenden Rotationsmaschinen, bei welchen unzulässige Schwingungen auftreten können, welche die Anlage zerstören können und daher der Betriebszustand notfallmässig oder planbar mittels Überwachungssignalen geändert werden muss, werden die Schwingungsamplituden oder deren Maximalwert meist im Bereich der Rotorenlager gemessen und mit vorgegebenen Schranken für Alarm- oder Notmassnahmen verglichen. Bei Überschreiten dieser Grenzwerte werden Überwachungssignale in Abhängigkeit von diesen Grenzwerten generiert, welche die Anlage beispielsweise auf eine andere Drehzahl stellen oder völlig abschalten. Dabei können die Messstellen an mehreren unterschiedlichen Orten der Anlage angeordnet sein und die Daten mitsammen verrechnet werden. So ist es auch möglich, dass von drei Messdaten nur zwei zur Auswertung herangezogen werden. Solche Verfahren werden zum Beispiel in DE-A-3 929 792 und EP-A-0 536 415 beschrieben.

Je nach Eigenart und der oft wechselnden Umgebungsbedingungen der Anlage können aber die zum Voraus festgelegten Grenzwerte unzutreffend sein und Fehlalarme auslösen. Solche Fehlalarme, insbesondere wenn sie mit Notabschaltungen verbunden sind, ergeben einen sehr beträchtlichen Aufwand zur Wiederinbetriebnahme und sonstiger Nebenkosten, welche tunlichst vermieden werden sollten. Insbesondere sind diese Grenzwerte schon rein technisch nicht eindeutig festlegbar, da sie z.B. von der Dauer eines bestimmten Betriebszustandes, beispielsweise des Anfahrzustandes, des i.a. damit verbundenen Erwärmungsgrades, usw. abhängen und vielfach stark schwanken. Die Berücksichtigung auch solcherweise wechselnder Messdaten ist gerätemässig und verarbeitungsmässig sehr aufwendig und es wird angestrebt, die Überwachung so einfach als möglich zu gestalten. Insbesondere, weil auch die Überwachungsgeräte ausfallen können oder ausfallsicher bzw. redundant vorgesehen werden müssen. Ausserdem treten fast alle Störungen, welche eine vibrationsbedingte Schutzabschaltung erfordern, plötzlich auf. Weshalb eine temporäre Erhöhung der Grenzwerte bei solchen Übergangsbetriebszuständen eine grosse Gefahr für die Anlage darstellen. Erfolgt z.B. genau in einer solchen Phase ein Schaufelbruch an einer Turbomaschine, dann würde die Maschine ev. nicht abgeschaltet und es könnten weitere Sekundärschäden entstehen.

### Darstellung der Erfindung

Die Erfindung versucht, diese wesentlichen Nachteile zu vermeiden. Es liegt ihr die Aufgabe zugrunde, ein Verfahren anzugeben, bei welchem Störzustände an der Maschine von betriebszustandsbedingt wechselnden Vorgängen, insbesondere Vibrationen oder dergleichen, zuverlässig unterschieden werden können.

Erfindungsgemäss wird diese Aufgabe dadurch gelöst, dass in einem ersten längeren Zeitintervall eine Anzahl Messdaten dieser Messgrösse aufgenommen und mit einer Ausgleichsfunktion aufbereitet werden, dass in einem - sich innerhalb des längeren Zeitintervalls befindenden - zweiten, kürzeren Zeitintervall in diesem aktuelle Messdaten derselben Messgrösse aufgenommen und mit den aufbereiteten Messdaten des längeren Zeitintervalls verglichen werden und dass je nach dem Vergleichsergebnis ein diesem entsprechendes Überwachungssignal ausgelöst wird.

Der besondere Vorteil der Erfindung ist darin zu sehen ,dass die Schutzeingriffe dann automatisch ausgelöst werden, wenn bei den Vibrationswerten schnelle Veränderungen auftreten. Die Massnahme erlaubt es, Veränderungen innert Sekunden oder gar Bruchteilen davon zu erfassen. Die Schutzeingriffe selbst können gestaffelt erfolgen, wobei je nach erreichtem Grenzwertniveau Eingriffe mit zunehmender Wirksamkeit ausgelöst werden, bspw. zunächst Alarmierung, danach prozessspezifischer Eingriff, Leistungsreduktion und schliesslich Notabschaltung. Obschon die Erfindung nicht bezweckt, langfristige Trends zu erfassen oder absolute Grenzwerte für die Schwingungsamplituden zu setzen, können diese Massnahmen mit Vorteil mit der Erfindung kombiniert werden. Die oben erwähnten Grenzwerte können somit etwas höher als bisher gesetzt werden, wodurch unnötige Schutzauslösungen u.U. vermieden werden können.

Weitere Merkmale und Vorteile ergeben sich aus den abhängigen Ansprüchen und aus der Beschreibung eines Ausführungsbeispieles.

### Weg zur Ausführung der Erfindung

Bei schnell laufenden Rotationsmaschinen, beispielsweise Gas- oder Dampfturbinen, Turbokompressoren, Pumpen odgl., können sich Schwingungen und Vibrationen von Rotoren etc. über die Wellenlager auf die ganze Anlage verbreiten. Solche Schwingungen oder davon abgeleitete oder berechnete Werte werden vorzugsweise an den Lagern der Rotoren als Messgrössen erfasst, um die Maschine zu überwachen.

Für eine bestimmte Messgrösse wird in einem ersten längeren Zeitintervall (t1) eine Anzahl Messdaten dieser Messgrösse aufgenommen und mit einer Ausgleichsfunktion aufbereitet. In einem zweiten, kürzeren Zeitintervall (t2) werden aktuelle Messdaten derselben Messgrösse aufgenommen. Dabei kann in diesem kürzeren Zeitintervall nur eine einzige Messung vorgenommen werden, welche mit den aufbereiteten Messdaten des längeren Zeitintervalls (t1) verglichen wird. Selbstverständlich können in diesem kürzeren Zeitintervall auch mehrere Messungen dieser Messgrösse stattfinden und aufbereitet werden, um - als aufbereitete Daten mit den im längeren ersten Zeitintervall (t1) aufbereiteten Daten verglichen zu werden. Dabei kann anstelle eines Vergleichs aber auch eine Differenzbildung erfolgen, um den Differenzwert mit einem Grenzwert zu vergleichen. Je nach dem Vergleichsergebnis wird dann ein diesem entsprechendes Überwachungssignal ausgelöst, welches ein Notabschaltsignal sein kann oder aber auch bloss ein Signal zur Drehzahlverringerung etc., um einen Übergang in einen anderen Betriebszustand zu erreichen. Die beiden Zeitintervalle (t1, t2) überschneiden sich im Regelfall. Sie enden mit der letzten Messablesung. Der zeitliche Abstand dieser beiden Messintervalle richtet sich auch wieder nach den Gegebenheiten der Anlage und ihrer Prozessabläufe. In den meisten Fällen wird prozess- und überwachungsbedingt das zweite Zeitintervall (t2) deutlich kürzer gewählt als das erste Zeitintervall (t1), weil ja vorzugsweise die rasch auftretenden Störfälle, wie Schaufelrisse oder Schaufelbrüche bei Turbomaschinen etc. erfasst werden sollen. Im kürzeren Zeitintervall (t2),welcher lediglich Sekundenbruchteile dauern kann, wird in der Regel genau eine Messablesung vorgenommen. Das erste Zeitintervall (t1) liegt hingegen in der Grössenordnung von Sekunden bis Minuten. Ebenso wird vorzugsweise als Ausgleichsfunktion je das arithmetische, das geometrische oder ein gewichtetes Mittel, Momente der zweiten oder höherer Ordnung odgl. verwendet. Es ist aber natürlich auch möglich, irgend eine andere, den zu überwachenden Vorgängen an der Maschine gerecht werdende mathematische Form zu verwenden.

Die Anwendung des neuen Verfahrens bietet sich insbesondere bei stationären Gasturbinen an, weil sich das Verfahren einerseits selbsttätig an den jeweiligen normalen Betriebszustand anpasst und andererseits wesentlich engere Schrankenwerte vorgegeben werden können, als es ohne Berücksichtigung des augenblicklichen normalen Betriebszustandes der Maschine der Fall wäre. Zudem sind diese Grenzwerte unabhängig vom momentanen Unwuchtzustand des Rotors. Damit können umfangreiche Einrichtungen für die Berücksichtigung der einzelnen Betriebszustände z.B. im Verlaufe einer Anfahrphase, entfallen.

## Patentansprüche

1. Verfahren zur Auslösung von Schutzmassnahmen an laufenden Turbomaschinen bei Auftreten von unzulässigen Vibrationen, wobei die Schwingungen oder davon abgeleitete Werte als Messgrössen an den Lagern der Rotoren gemessen werden,
**dadurch gekennzeichnet, dass** in einem ersten Zeitintervall (t1) eine Anzahl Messdaten dieser Messgrössen aufgenommen und mit einer Ausgleichsfunktion aufbereitet werden, dass in einem - sich innerhalb des ersten Zeitintervalls (t1) befindenden - zweiten, kürzeren Zeitintervall (t2) in diesem aktuelle Messdaten derselben Messgrössen aufgenommen und mit den aufbereiteten Messdaten des ersten Zeitintervalls (t1) verglichen werden und dass je nach dem Vergleichsergebnis ein diesem entsprechendes Überwachungssignal generiert wird, welches die Schutzmassnahmen auslöst.

2. Verfahren nach Anspruch 1, **dadurch gekennzeichnet, dass** die aktuellen Messdaten des kürzeren Zeitintervalls (t2) einzeln mit den aufbereiteten Messdaten des ersten Zeitintervalls (t1) verglichen oder die Differenzen gebildet werden.

3. Verfahren nach Anspruch 1, **dadurch gekennzeichnet, dass** die aktuellen Messdaten des kürzeren Zeitintervalls (t2) ebenfalls mit einer Ausgleichsfunktion aufbereitet werden und das Ergebnis mit den aufbereiteten Messdaten des ersten Zeitintervalls (t1) verglichen oder die Differenz gebildet wird.

4. Verfahren nach Anspruch 1, **dadurch gekennzeichnet, dass** die beiden Zeitintervalle (t1, t2) gleichzeitig enden.

5. Verfahren nach Anspruch 1, **dadurch gekennzeichnet, dass** im kürzeren Zeitintervall (t2) genau eine Messablesung vorgenommen wird.

6. Verfahren nach Anspruch 5, **dadurch gekennzeichnet, dass** das erste Zeitintervall (t1) in der Grössenordnung von Sekunden bis Minuten andauert.

7. Verfahren nach Anspruch 1, **dadurch gekennzeichnet, dass** als Ausgleichsfunktion je das arithmetische, das geometrische oder ein gewichtetes Mittel, Momente der zweiten oder höherer Ordnung verwendet wird.

8. Verfahren nach Anspruch 1, **dadurch gekennzeichnet, dass** als Überwachungssignal ein Notabschaltsignal generiert wird.

## Claims

1. Method for initiating protective measures on running turbomachines upon the occurrence of impermissible vibrations, the vibrations or values derived therefrom being measured as measured variables at the bearings of the rotors, **characterized in that** in a first time interval (t1) a number of measured data of these measured variables are recorded and conditioned using an equalizing function, **in that** in a second, relatively short time interval (t2), which is located inside the first time interval (t1), current measured data of the same measured variables are recorded and compared with the conditioned measured data of the first time interval (t1), and **in that** depending on the result of the comparison a monitoring signal corresponding to said result is generated and triggers the protective measures.

2. Method according to Claim 1, **characterized in that** the current measured data of the relatively short time interval (t2) are compared individually with the conditioned measured data of the first time interval (t1), or the differences are formed.

3. Method according to Claim 1, **characterized in that** the current measured data of the relatively short time interval (t2) are likewise conditioned using an equalizing function and the result is compared with the conditioned measured data of the first time interval (t1), or the difference is formed.

4. Method according to Claim 1, **characterized in that** the two time intervals (t1, t2) end at the same time.

5. Method according to Claim 1, **characterized in that** exactly one measurement reading is taken in the relatively short time interval (t2).

6. Method according to Claim 5, **characterized in that** the duration of the first time interval (t1) is of the order of magnitude of seconds to minutes.

7. Method according to Claim 1, **characterized in that** use is respectively made as equalizing function of the arithmetic mean, the geometric mean or a weighted mean, or moments of the second or higher order.

8. Method according to Claim 1, **characterized in that** an emergency shutdown signal is generated as monitoring signal.

## Revendications

1. Procédé pour déclencher des mesures de protection sur des turbomachines en rotation lors de l'apparition de vibrations inadmissibles, les oscillations ou des valeurs qui en sont déduites étant mesurées en tant que grandeurs de mesure sur les paliers des rotors, **caractérisé en ce que** dans un premier intervalle de temps (t1), on enregistre un certain nombre de données de mesure de ces grandeurs de mesure et on les traite par une fonction de compensation, **en ce que** dans un deuxième intervalle de temps (t2), plus court et situé à l'intérieur du premier intervalle de temps (t1), pendant lequel les données effectives de mesure des mêmes grandeurs de mesure sont enregistrées et sont comparées avec les données de mesure traitées du premier intervalle de temps (t1) et **en ce qu'**en fonction du résultat de la comparaison, un signal de surveillance approprié est généré et déclenche les mesures de protection.

2. Procédé selon la revendication 1, **caractérisé en ce que** les données effectives de mesure du court intervalle de temps (t2) sont comparées individuellement aux données de mesure traitées du premier intervalle de temps (t1) ou **en ce que** les différences en sont formées.

3. Procédé selon la revendication 1, **caractérisé en ce que** les données effectives de mesure du court intervalle de temps (t2) sont également traitées par une fonction de compensation, le résultat étant comparé aux données de mesure préparées du premier intervalle de temps (t1), ou la différence en étant formée.

4. Procédé selon la revendication 1, **caractérisé en ce que** les deux intervalles de temps (t1, t2) se terminent en même temps.

5. Procédé selon la revendication 1, **caractérisé en ce qu'**une lecture des mesures est réalisée exactement pendant le court intervalle de temps (t2).

6. Procédé selon la revendication 5, **caractérisé en ce que** le premier intervalle de temps (t1) dure de l'ordre de quelques secondes à quelques minutes.

7. Procédé selon la revendication 1, **caractérisé en ce que** comme fonction de compensation, on utilise la moyenne arithmétique, la moyenne géométrique ou une moyenne pondérée des couples d'ordre deux ou plus élevés.

8. Procédé selon la revendication 1, **caractérisé en ce que** comme signal de surveillance, on génère un signal de débranchement d'urgence.
